# EUROPÄISCHE PATENTSCHRIFT

(11) **EP 2 758 697 B1**
(45) Veröffentlichungstag und Bekanntmachung des Hinweises auf die Patenterteilung: **09.09.2015**
(21) Anmeldenummer: 12759103.0
(22) Anmeldetag: 12.09.2012
(51) Int. Cl.: F16K 31/08, F16K 11/10

(54) **VENTIL, BEI DEM MEHRERE VENTILSCHLIESSKÖRPER IN EINER VENTILKAMMER ANGEORDNET SIND, UND WASSERFÜHRENDES HAUSHALTSGERÄT MIT SOLCHEM VENTIL**
VALVE, IN WHICH A PLURALITY OF VALVE CLOSING BODIES IS ARRANGED IN A VALVE CHAMBER AND WATER-BEARING HOUSEHOLD APPLIANCE HAVING SUCH A VALVE
VANNE COMPORTANT PLUSIEURS OBTURATEURS DISPOSÉS DANS UNE CHAMBRE DE VANNE, ET APPAREIL MÉNAGER À CIRCULATION D'EAU ÉQUIPÉ D'UNE TELLE VANNE

(30) Priorität: 23.09.2011 DE 102011083299
(43) Veröffentlichungstag der Anmeldung: 30.07.2014
(73) Patentinhaber: BSH Hausgeräte GmbH, 81739 München (DE)
(72) Erfinder: EGLMEIER, Hans, 10587 Berlin (DE); KOCH, Thomas, 13591 Berlin (DE)
(86) Internationale Anmeldenummer: PCT/EP2012/067783
(87) Internationale Veröffentlichungsnummer: WO 2013/041418

(56) Entgegenhaltungen:
- DE-B3-102009 012 822
- DE-C1- 19 922 414
- US-A- 5 807 085

## Beschreibung

Die Erfindung betrifft ein Ventil, das insbesondere für wasserführende Haushaltsgeräte dient. Speziell betrifft die Erfindung das Gebiet der Wäschebehandlungsgeräte zum Waschen und/oder Trocknen von Wäsche.

Aus der WO 2011/018385 A1 ist ein wasserführendes Haushaltsgerät mit einem Schaltventil bekannt. Das Schaltventil weist einen Ventilraum auf, in den ein mit einer Eingangsleitung verbundener Eingang mündet. Ferner sind ein erster Ausgang mit einer ersten Ventilsitzfläche und ein zweiter Ausgang mit einer zweiten Ventilsitzfläche an dem Schaltventil vorgesehen. Eine magnetische Betätigungseinrichtung dient zum Betätigen eines Ventilschließkörpers. Der Ventilschließkörper ist dabei in dem Ventilraum angeordnet und wirkt einerseits mit der ersten Ventilsitzfläche und andererseits mit der zweiten Ventilsitzfläche zu einem Dichtsitz zusammen. Die magnetische Betätigungseinrichtung weist Magnetspulen auf, wobei eine der Magnetspulen die erste Ventilsitzfläche umfänglich umschließt und die andere Magrietspule die zweite Ventilsitzfläche umfänglich umschließt. Ferner weist der Ventilraum eine Mulde auf, die im unbestromten Zustand der Magnetelemente zum Aufnehmen des Ventilschließkörpers dient, wobei die Dichtsitze an den Ventilsitzflächen dann geöffnet sind.

Das aus der WO 2011/018385 A1 bekannte Haushaltsgerät hat den Nachteil, dass zum Betätigen des einzigen Ventilschließkörpers des Schaltventils zwei Magnetspulen erforderlich sind, die von einer Steuerung entsprechend den drei möglichen Betriebsmodi angesteuert werden müssen. Im Unterschied zu einem mechanisch betätigten Ventilschließkörper, der von einem einzigen elektromagnetischen Aktor betätigt werden kann, ist somit eine weitere Magnetspule erforderlich. Außerdem besteht das Problem, dass in der mittleren Stellung des kugelförmigen Ventilschließkörpers Wirbel in der Strömung des zugeführten Wassers entstehen, welches hierbei beidseitig über die beiden geöffneten Dichtsitze abfließt. Denn durch die Aufteilung der Strömung entstehen an beiden Seiten des kugelförmigen Ventilschließkörpers Wirbel, die sich abwechselnd lösen. Hierdurch wird der kugelförmige Ventilschließkörper zunächst leicht in Bewegung versetzt und anschließend kommt es zum Aufschaukeln der Bewegung. Wird der kugelförmige Ventilschließkörper zu weit aus der Mulde bewegt, dann kann die Mittelstellung nicht mehr stabil gehalten werden.

Aus der DE 199 22 414 C1 ist ein magnetisch betätigbares Ventil bekannt. Das bekannte Ventil weist ein Ventilgehäuse auf, in dem ein Innenraum vorgesehen ist, der durch eine aus magnetisierbarem Material bestehende Wand begrenzt ist. Ferner sind eine Zuströmöffnung und eine Abströmöffnung vorgesehen. Ein Ventilsitz an der Abströmöffnung ist mit einem magnetisch bewegbaren Verschlusskörper verschließbar. Hierbei ist der Verschlusskörper in dem Innenraum parallel zum Ventilsitz bewegbar, wobei die magnetisierbare Wand eine das Magnetfeld deformierende Unstetigkeitsstelle aufweist, an der das Magnetfeld eine parallel zum Ventilsitz gerichtete Kraft auf den Verschlusskörper ausübt. Entsprechend sind in dem Ventilgehäuse mehrere solche parallel angeordnete Innenräume vorgesehen, wobei jedem Innenraum eine unterschiedliche Unstetigkeitstelle zugeordnet ist und die Magnetvorrichtung Magnetfelder unterschiedlicher Stärke erzeugen kann, so dass abhängig von der Stärke des Magnetfelds die Verschlusskörper in den Innenräumen selektiv bewegbar sind. Bei einem ersten relativ niedrigen Stromniveau wird somit lediglich ein Verschlusskörper bewegt. Bei einem zweiten, nächsthöheren Stromniveau wird zusätzlich zu dem ersten Verschlusskörper ein zweiter Verschlusskörper bewegt, so dass der Durchsatz des Fluids in der Leitung schrittweise erhöht oder verringert werden kann.

Das aus der DE 199 22 414 C1 bekannte magnetisch betätigbare Ventil hat den Nachteil, dass mit einer Magnetvorrichtung nur eine schrittweise Durchflussmengensteuerung möglich ist. Zum Schalten mehrerer Leitungen oder Wege sind somit mehrere solcher magnetisch betätigbaren Ventile und damit auch eine entsprechend große Anzahl an Magnetvorrichtungen erforderlich. Außerdem ergibt sich ein hoher Energieverbrauch. Der Steuerungsaufwand ist bei mehreren Wegen ebenfalls groß.

Aus der DE 27 07 663 A1 ist eine Umschaltvorrichtung zum wahlweisen Verbinden einer Medienzuführleitung mit einer von mehreren Abführleitungen bekannt. Dabei ist eine Ausführungsform beschrieben, bei der zwei Düsenkörper in einem einzigen Hohlraum angeordnet sind. Der Hohlraum ist hierbei in drei im Wesentlichen um 120° gegeneinander versetzte Teilräume unterteilt. An den äußeren Enden sind die Teilräume mit je einer Abführleitung verbunden. Im Übergangsbereich bilden die Teilräume Ventilsitze für die zwei in dem Hohlraum frei beweglichen Ventilkörper.

Aus dem US-Patent 3,224,457 ist ein Ventil bekannt, bei dem Ventilelemente durch die Schwerkraft in eine Zwischenposition bewegbar sind, wobei die Ventilelemente durch ein Fluid aus den Zwischenpositionen in eine andere, den Fluidstrom steuernde Position bewegbar sind.

Aus der DE 30 16 256 A1 ist ein Umstellventil bekannt. Hierbei ist im Innenraum des Gehäuses ein Käfig zur losen Führung von Kugeln an einer bewegbar auf der Mittelachse des Gehäuses herausgeführten Ventilstange ausgebildet.

Aus der DE 102 49 936 A1 ist eine Ventilanordnung mit mehreren Ventilen bekannt. Hierbei ist im Bereich eines jeden Ventils wenigstens ein Permanentmagnet angeordnet, der eine innerhalb des Ventils angeordnete Kugel gegen den Ventilsitz presst oder in einem vorgebbaren Abstand davon hält. Träger für die Permanentmagneten können als drehbare, runde Scheiben ausgebildet werden. Als Antrieb für die beiden Scheiben kann ein Schrittschaltwerk in Form eines Schrittmotors verwendet werden.

Aus der JP 58 099 566 A ist ein 3-Wegeventil mit zwei Positionen für eine Ventilkugel bekannt.

Aus der DE 102 49 937 A1 ist eine Ventilanordnung mit mehreren Ventilen bekannt. Die Ventile weisen hierbei jeweils wenigstens zwei Öffnungen auf, die mit ferromagnetischen Kugeln verschließbar sind. Hierbei ist jede Öffnung zeitlich versetzt zu den anderen Öffnungen mit der gleichen Kugel verschließbar.

Aufgabe der Erfindung ist es, ein Ventil und ein wasserführendes Haushaltsgerät mit einem Ventil zu schaffen, die einen verbesserten Aufbau aufweisen. Speziell ist es eine Aufgabe der Erfindung, ein Ventil und ein wasserführendes Haushaltsgerät anzugeben, bei denen ein zugeführter Frischwasserstrom gezielt in einen von mehreren Wegen geleitet werden kann, wobei der Aufwand für die Auswahl des jeweiligen Weges optimiert ist. Die Aufgabe wird durch ein Ventil, das insbesondere für ein wasserführendes Haushaltsgerät dient, und ein wasserführendes Haushaltsgerät gemäß entsprechendem unabhängigem Patentanspruch gelöst. Durch die in den abhängigen Patentansprüchen oder nachfolgender Beschreibung aufgeführten oder in der beigefügten Zeichnung dargestellten Maßnahmen sind vorteilhafte und bevorzugte Weiterbildungen des erfindungsgemäßen Ventils und des erfindungsgemäßen wasserführenden Haushaltsgeräts möglich.

Die Aufgabe wird demnach durch ein Ventil, das insbesondere für ein wasserführendes Haushaltsgerät dient, gelöst, wobei zumindest eine Ventilkammer und mehrere Ventilschließkörper vorgesehen sind, wobei die Ventilschließkörper in der Ventilkammer angeordnet sind, wobei die Ventilkammer mehrere Ausgänge aufweist, wobei die Anzahl der Ausgänge größer ist als die Anzahl der Ventilschließkörper, wobei die Ventilschließkörper zum Besetzen der Ausgänge an den Ausgängen der Ventilkammer angeordnet sind, wobei eine Betätigungseinrichtung vorgesehen ist, die zum Verstellen eines Ventilschließkörpers, der an einem besetzten Ausgang angeordnet ist, an einen freien Ausgang dient, wobei die Betätigungseinrichtung als Schrittschaltwerk ausgestaltet ist, wobei das Schrittschaltwerk zumindest ein Magnetelement aufweist und wobei das Schrittschaltwerk mittels des Magnetelements den Ventilschließkörper an den freien Ausgang verstellt. Ferner wird die Aufgabe durch ein wasserführendes Haushaltsgerät, insbesondere ein Wäschebehandlungsgerät zum Waschen und/oder Trocknen von Wäsche gelöst, das solch ein Ventil aufweist.

Die Ventilschließkörper können in vorteilhafter Weise jeweils eine als Kugeloberfläche ausgestaltete Oberfläche aufweisen. Speziell können die Ventilschließkörper als kugelförmige oder hohlkugelförmige Ventilschließkörper ausgestaltet sein. Hierdurch kann das Ventil als Kugelventil ausgestaltet werden. Die in einer Ventilkammer angeordneten Ventilschließkörper sind in vorteilhafter Weise gleich ausgestaltet. Der Ventilschließkörper ist vorzugsweise kugelförmig, er könnte jedoch auch von der Kugelform ein wenig abweichen, z.B. eiförmig oder ein Ellipsoid sein. Es wäre auch denkbar, den Ventilschließkörper walzenförmig (zylindrisch) zu gestalten. Es in jedem Fall von Vorteil, wenn sich die Ventilschließkörper in dem Ventilraum gut beweglich sind, vorzugsweise rollen können, um sich die Ausgänge zu bewegen. Der Durchmesser der Ventilschließkörper sollte auf die Durchmesser der Ausgänge, welche sinnvollerweise denselben Durchmesser haben sollten, sinnvoll abgestimmt sein, d.h. einen größeren Durchmesser haben, damit sie dichtend die Ausgänge verschließen können. Um von der Betätigungseinrichtung bewegt werden zu können, ist es von Vorteil, wenn die Ventilschließkörper entweder selbst magnetisch sind oder ein ferromagnetisches Material enthält. Ein ferromagnetisches Material ist ein Material, das von einem Magneten angezogen werden kann. Dieses Material kann z.B. aus Eisenspänen bestehen, die in dem Material des Ventilschließkörpers mit verarbeitet sind. Um eine verbesserte dichtende Wirkung zu erzielen, bietet es sich an, wenn die Ventilschließkörper aus einem weichelastischen Kunststoff gefertigt sind, beispielsweise Silikon oder dergleichen. Ein derartiger Kunststoff kann durch bekannte Gussverfahren in die gewünschte Form gebracht werden, und ein ferromagnetisches Material kann mit eingegossen werden. Es sind aber auch metallische ferromagnetische Ventilschließkörper denkbar. Ferner ist es vorteilhaft, dass die Ventilschließkörper eine auf zumindest einem Kunststoff basierende Schale aufweisen. Hierdurch kann die Dichtwirkung der Ventilschließkörper an dem jeweiligen Ausgang verbessert werden. Außerdem ist es möglich, dass die Ventilschließkörper als hohlkugelförmige Ventilschließkörper ausgestaltet sind. Dies ermöglicht eine Verringerung der Masse der Ventilschließkörper, so dass sich die von dem Magnetelement der Betätigungseinrichtung aufzubringende Verstellkraft reduziert.

In vorteilhafter Weise ist die Anzahl der Ausgänge um eins größer als die Anzahl der Ventilschließkörper. Somit bleibt genau ein Ausgang frei, während die anderen Ausgänge mit den Ventilschließkörpern verschlossen sind. Das Schrittschaltwerk dient dann zum Verstellen der Ventilschließkörper, so dass durch ein- oder mehrfaches Verstellen der gewünschte Ausgang gewählt werden kann.

Außerdem ist es vorteilhaft, dass genau ein Eingang für die Ventilkammer vorgesehen ist. Hierdurch ergibt sich ein kompakter Aufbau, bei dem außerdem die Anzahl der Anschlussstellen und somit auch die Anzahl an Verbindungsmitteln optimiert ist.

In vorteilhafter Weise sind die Ausgänge der Kammer nebeneinander liegend angeordnet. Dies bedeutet, dass die Ausgänge in einer Reihe angeordnet sind, so dass ein Ausgang jeweils zwei benachbarte Ausgänge hat, bis auf die beiden endseitige Ausgänge. Es ist aber möglich und bevorzugt, dass die Ausgänge auf einer ununterbrochenen Kreisbahn angeordnet sind. Dadurch kann bereits durch ein nur in einer Richtung erfolgendes Verstellen der Ventilschließkörper jeder der Ausgänge angewählt werden.

Möglich ist es allerdings auch, dass zwei Ausgänge als endseitige Ausgänge dienen, zwischen denen ein Platztausch eines Ventilschließkörpers nicht möglich ist. Das Verstellen muss in diesem Fall daher in beiden Richtungen möglich sein. Allerdings ergibt sich hierbei der Vorteil, dass durch ein ausreichend häufiges Verstellen der Ventilschließkörper in einer Richtung eine eindeutige Anordnung erzielt wird, bei der ein bestimmter endseitiger Ausgang geöffnet ist. Dies ermöglicht beispielsweise die Durchführung einer Initialisierungsroutine. Außerdem kann dann auf einen Sensor oder dergleichen verzichtet werden, da ausgehend von der gewünschten Ausgangsstellung bei Kenntnis der Verstellbewegungen der Ventilschließkörper auch die momentane Stellung bekannt ist.

In vorteilhafter Weise sind die Ausgänge auf einer zwischen den endseitigen Ausgängen unterbrochenen Kreisbahn angeordnet. Hierdurch kann auch bei der Ausgestaltung mit den endseitigen Ausgängen eine Ansteuerung mittels einer Kreisbewegung eines Schaltelementes des Schrittschaltwerks erfolgen.

Möglich ist es allerdings auch, dass die Ausgänge der Kammer geradlinig hintereinander liegend angeordnet sind. Hierdurch kann eine vorteilhafte Bauform realisiert werden.

Die Betätigungseinrichtung weist vorzugsweise einen Magneten auf, mit dem die Ventilschließkörper bewegt werden können. Dieser Magnet ist beweglich angeordnet und entlang den Ausgängen steuerbar, sodass jeweils ein Ventilschließkörper durch den Magneten in die jeweils freie Position der Ausgänge bewegt wird, wenn der Magnet die Ausgänge genau einmal entlangfährt.

Die Betätigungseinrichtung kann von einem Motor mit einem Getriebe kontinuierlich betrieben werden.

Vorzugsweise ist die Betätigungseinrichtung als Schrittschaltwerk, z.B. mit einem Klinkenrad, ausgebildet. Außerdem ist es vorteilhaft, dass das Schrittschaltwerk ein Magnetelement aufweist und dass das Schrittschaltwerk mittels des Magnetelements den Ventilschließkörper an den freien Ausgang verstellt.

Außerdem ist es vorteilhaft, dass das Schrittschaltwerk ein Schaltrad aufweist, an dem das Magnetelement angebracht ist. Mit einer Umdrehung des Schaltrads kann dann eine Verstellbewegung realisiert werden. Hierdurch ist eine Untersetzung möglich, so dass ein Getriebe eingespart werden kann oder sich die Ausgestaltung eines Getriebes vereinfacht. Allerdings ist hierbei in einfacher Weise eine Anpassung möglich, indem die Anzahl der Magnetelemente, die an dem Schaltrad angebracht sind, größer als 1 gewählt ist. Beispielsweise kann etwa entsprechend jedem zweiten Ausgang der Kammer ein Magnet an dem Schrittschaltwerk vorgesehen sein, ohne dass der grundsätzliche Bewegungsablauf gestört wird. Der hierdurch erreichbare Stellweg kann so kurz sein, dass bereits ein kleiner Hubmagnet mit einem Schaltrad (Klinkenrad) zum Weiterschalten ausreicht. Generell kann durch mehr als ein Magnetelement der Stellweg verringert werden.

In vorteilhafter Weise können mit einem einzigen oder einigen wenigen Elektromagneten und einer passenden Mechanik ein Stellmotor oder ein Schrittgetriebeantrieb realisiert werden, die über einen einen oder mehrere Permanentmagneten tragenden Effektor, beispielsweise eine Scheibe, eine Walze, einen Schieber, eine Kulisse oder einen Schaltfinger, eine gewisse Anzahl von kugelförmigen Venfiilschließkörpern gezielt manipulieren kann. Prinzipiell kann eine mögliche Anordnung mit einzelnen Spulen auch durch mechanisch bewegte Permanentmagneten realisiert werden, welche beispielsweise von einem zentralen Aktor so bewegt werden, dass dadurch eine den Spulen äquivalente Wirkung erzeugt wird. Diese Art der Ansteuerung kann bei bestimmten Varianten besonders vorteilhaft sein.

Die Ventilschließkörper können speziell als kugelförmige Ventilschließkörper ausgestaltet sein, so dass die Ventilkammer als Kugelkammer dient. In vorteilhafter Weise kann eine zylinderförmige Kugelkammer mit einer Anzahl n von kreisförmig angeordneten, als Wasserauslässe dienenden Ausgängen mit zugehörigen Dichtsitzen am Boden der Kugelkammer und einer Anzahl n minus 1 von in der Kammer befindlichen kugelförmigen Ventilschließkörpern realisiert werden. Ein Kammerdurchmesser und ein Durchmesser der Ventilschließkörper sind beispielsweise so bemessen, dass sich die kugelförmigen Ventilschließkörper gerade berühren. Die kugelförmigen Ventilschließkörper setzen sich durch die Schwerkraft in die Dichtsitze, so dass genau ein Ausgang freibleibt, durch den das durch den Einlass kommende Medium austritt. Zum Ändern des Schaltzustands des Ventils kann ein einzelner Magnet kreisförmig bewegt werden. Der einzelne Magnet ist so dimensioniert, dass er zu schwach ist, um mehrere kugelförmige Ventilschließkörper gleichzeitig über die Dichtsitzkegel zu heben bzw. die dabei zusätzlich auftretende Reibung zu überwinden, ein einzelner kugelförmiger Ventilschließkörper aber leicht von dem Magneten mitgenommen wird. Bei jedem Umlauf des Magneten wird der freie Ausgang, d.h. der Auslass, um eine Position weitergeschaltet. Dies ist prinzipiell in beiden Richtungen möglich. Es ergibt sich hierbei eine zusätzliche Untersetzung der Ansteuerbewegung, die im Fall der Ansteuerung mit einem Getriebemotor eine entsprechende Getriebestufe einspart. Bei fünf Ausgängen kann durch diesen Mechanismus eine Untersetzung von 1:5 gegeben sein. Mit einem solchen Ventil lassen sich eine Anzahl n von Ausgängen sukzessive in beiden Richtungen auf einen Eingang schalten, wobei ein Aktor zum Antreiben des Permanentmagneten zum Einsatz kommen kann.

Vorteilhaft ist auch die linear Anordnung der Ausgänge. Durch zyklisches Bewegen eines Permanentmagneten kann die Leerstelle je Zyklus eine Position weitergeschaltet werden. Hierbei kann je nach Bewegungsrichtung des Magneten ein vor- oder rückwärts gerichtetes Schalten erfolgen. Da diese Anordnung an beiden Enden für die Kugelkette aus kugelförmigen Ventilschließkörpern einen Anschlag bietet, sammeln sich durch n-maliges Bewegen des Magneten alle Kugeln auf einer Seite an, was unabhängig von der Ausgangssituation ist. Hierbei ist die Anzahl der Kugeln n. Dadurch ist eine eindeutige Schaltpositionsreferenz ohne zusätzlichen Sensor gegeben, die sich etwa im Rahmen einer Initialisierungsprozedur zu Beginn des Programms verwenden lässt.

Zweckmäßig ist es hierbei auch, dass das lineare Ventilsystem zu einem Bogen geformt wird, wodurch die Ansteuerbewegung einfacher wird. Beispielsweise kann ein Magnet auf einem rotierenden Finger zum Realisieren der Ansteuerung zum Einsatz kommen. Ein Anschlag kann allerdings auch bei einer kreisförmigen Anordnung realisiert werden, indem beispielsweise eine Wand zwischen zwei Kugelpositionen vorgesehen ist, so dass mit diesem Anschlagsystem ebenfalls eine Referenzposition ermöglicht wird. Bei einer anderen Ausgestaltung ist die Verwendung eines Aktors mit einer einzigen Magnetspule möglich, wenn nur eine Durchlaufrichtung gewünscht ist. Hierbei kann das Ventil nur in einer Richtung, etwa in aufsteigender Reihenfolge der Ausgänge geschaltet werden. Nach einer Anzahl n von Durchläufen wiederholt sich der Zyklus wieder beim ernsten Ausgang beginnend. Der Aktor kann beispielsweise aus einem Hubmagneten bestehen, der ein Klinkenrad weiterschaltet. Nachteilig ist dann allerdings eine relativ hohe Schaltzeit, falls ein Rückwärtsschalten notwendig ist. Da der Fluidstrom in der Regel durch ein Hauptventil eines wasserführenden Haushaltsgeräts ein- und ausgeschaltet wird, ist eine beliebige Auswahl eines Ausgangs möglich, ohne beim Schalten die dazwischen liegenden Kanäle mit Fluid beaufschlagen zu müssen.

Andererseits kann durch den Einsatz eines Aktors mit mindestens zwei Elektromagneten ein Motor realisiert werden, der sich in beide Richtungen bewegen kann, so dass sich die Schaltrichtung wählen lässt. Dies erfordert allerdings einen zusätzlichen Aufwand, insbesondere zumindest eine zusätzliche Spule und eine zumindest zwei Bit breite Ansteuerung. Andererseits kann mit einem polarisierten Rotor und umpolbarer Spule auch mit nur einer Spule ein in beide Richtungen arbeitender Antrieb realisiert werden.

Vorteilhaft ist auch eine Positionswahl über einen analogen Stellmotor mit einer Positionserfassung, etwa einem Getriebemotor für langsame Drehung sowie einem oder mehreren Sensoren zur Positionserfassung. Hierbei ist in vorteilhafter Weise eine Positionserfassung des ohnehin mit Permanentmagneten bestückten Rotors mit einem oder mehreren Reed-Kontakten möglich.

Vorteilhaft ist auch der Einsatz eines elektromechanischen Schrittgetriebes, bei dem eine vergleichsweise langsame Drehung, beispielsweise von einem Getriebemotor, in einzelne Schritte umgesetzt wird. Beispielsweise kann ein Malteserkreuzgetriebe zum Einsatz kommen.

Neben elektrischen können auch anders angetriebene Schrittschaltwerke zum Einsatz kommen, insbesondere hydraulisch angetriebene Schrittschaltwerke. Ein hydraulisches Schrittschaltwerk wird hierbei vorzugsweise direkt vom Leitungswasserdruck angetrieben. Beispielsweise kann jeder Impuls durch Öffnen des Hauptventils das Schrittgetriebe eine Position weiterschalten. Speziell ist dabei auch eine Rückkopplung, beispielsweise des aktuell geöffneten Ventilzweigs, vorteilhaft, da dadurch auch komplexere Steueraufgaben möglich sind.

Hydraulische Schrittgetriebe können mit zwei oder mehreren eingangsseitigen Ventilen zur Ansteuerung realisiert werden. Beispielsweise kann ein Ventil zum schrittweisen Durchschalten vorgesehen sein, und ein zweites Ventil schaltet den Wasserfluss. Möglich sind auch gemischte Basiszustände, insbesondere auch unter Einbeziehung weiterer, im aktuellen Schritt nicht benötigter Ventile, zum Beispiel durch Nutzung des Warmwasserventils zur Steuerung des Kaltwassers und umgekehrt. Insbesondere kann dadurch auch ein Rückkoppeln des aktuellen Schaltzustands auf die hydraulischen Aktoren des Ventilsystems sehr komplexe Schaltfolgen ermöglichen.

Bei Schrittgetrieben ist in vorteilhafter Weise mindestens eine Referenzposition bekannt, ab der sich im Betrieb durch Mitzählen der angesteuerten Schritte, was nach oben oder unten erfolgen kann, die aktuelle Position bestimmt. Zum Initialisieren des Ventilsystems wird zunächst diese Referenzposition angefahren oder überprüft. Eine vorteilhafte Möglichkeit zur Realisierung eines Referenzsensors ergibt sich durch Einbringen von Düsen im Wasserweg eines oder mehrerer der Kanäle oder gegebenenfalls auch in einem speziell dafür eingerichteten Kanal zusammen mit einer Durchflussmessung, die beispielsweise durch einen bereits vorhandenen Flügelradzähler realisiert werden kann. Auch bei insgesamt schwankenden Durchflusswerten kann der aktuelle Kanal oder die Referenzposition durch die relativen Volumenströme ermittelt werden.

In vorteilhafter Weise kann eine kostengünstige Referenzermittlung durch Einkoppeln der Wirkung mindestens eines der Steuermagneten auf den gegebenenfalls vorhandenen magnetischen Durchflusssensor realisiert werden. Beispielsweise kann der Reed-Kontakt eines magnetischen Durchflussmessers in einer speziellen Position des Schaltaktors von einem der Schaltmagneten beeinflusst werden. Diese Beeinflussung kann derart erfolgen, dass das von dem Flügelradmagneten gelieferte Signal invertiert wird, beispielsweise durch gegeneinander gepolte Magnete entsprechender Magnetstärke, die auf dem Aktor bzw. dem Flügelrad montiert sind. Ein Flankenwechsel im Reed-Signal bei ausgeschaltetem Wasserstrom zeigt dann ein Erreichen der Referenzposition an.

Außerdem ist ein direktes, vorzugsweise mechanisches Einkoppeln von mechanischen Parametern der Maschine, insbesondere des wasserführenden Haushaltsgeräts, in das Ventilsystem möglich mit einer entsprechenden Verzweigung der Wasserwege, etwa einer Umleitung der Wasserströme bei geöffneter Einspülschale. Ein Magnet an der Einspülschale kann direkt, das heißt ohne Umweg über die Steuerung, in das Ventil eingreifen. Hierbei kann ein Prinzip realisiert werden, das auch für Schwimmerschalter in Tank- und Vorratssystemen, bei denen der Schwimmer einen Magneten trägt, welcher direkt auf eine Schaltkugel in einer Ventilkammer wirkt, zum Einsatz kommt.

Bevorzugte Ausführungsbeispiele der Erfindung sind in der nachfolgenden Beschreibung anhand der Figuren der beigefügten Zeichnung, in denen sich entsprechende Elemente mit übereinstimmenden Bezugszeichen versehen sind, näher erläutert. Es zeigt:
- Fig. 1: ein Ventil für ein wasserführendes Haushaltsgerät in einer auszugsweisen, schematischen Schnittdarstellung entsprechend einem ersten Ausführungsbeispiel;
- Fig. 2: das in Fig. 1 dargestellte Ventil des ersten Ausführungsbeispiels in einer schematischen, auszugsweisen Schnittdarstellung entlang der mit II bezeichneten Schnittlinie und
- Fig. 3: ein Ventil für ein wasserführendes Haushaltsgerät in einer auszugsweisen, schematischen Schnittdarstellung entsprechend einem zweiten Ausführungsbeispiel.

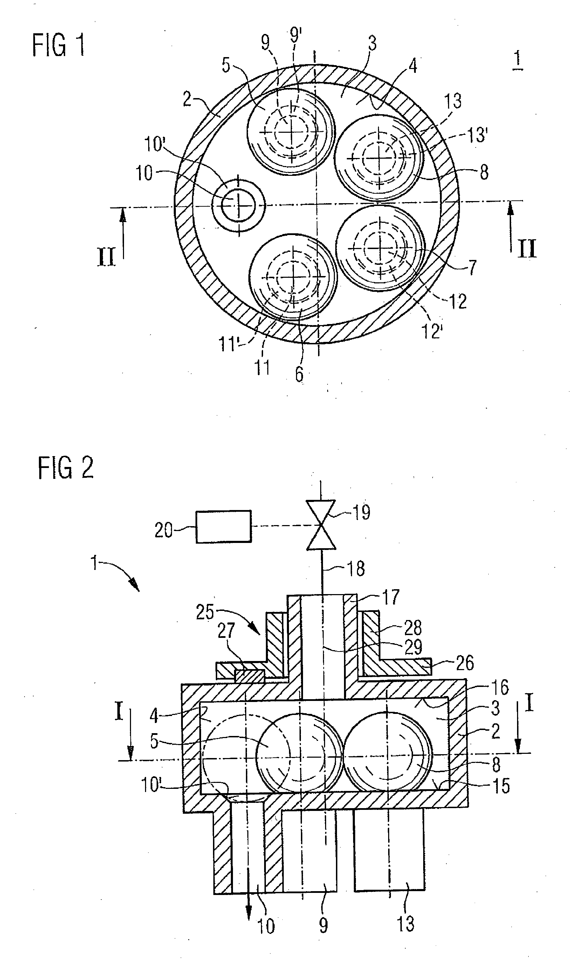

Fig. 1 zeigt ein Ventil 1 in einer auszugsweisen, schematischen Schnittdarstellung entsprechend einem ersten Ausführungsbeispiel. Das Ventil 1 kann insbesondere für ein wasserführendes Haushaltsgerät dienen. Solch ein Haushaltsgerät kann insbesondere als Wäschebehandlungsgerät zum Waschen und/oder Trocknen von Wäsche ausgestaltet sein. Das Ventil 1 und das Haushaltsgerät mit solch einem Ventil 1 der Erfindung eignen sich allerdings auch für andere Anwendungsfälle.

Das Ventil 1 weist ein Gehäuse 2 auf, in dem eine Ventilkammer 3 ausgestaltet ist. Die Ventilkammer 3 wird hierbei durch eine zylindermantelförmige Innenwand 4 des Gehäuses 2 begrenzt. Die Ventilkammer 3 ist in diesem Ausführungsbeispiel als zylindrische Ventilkammer 3 ausgestaltet.

Das Ventil 1 weist mehrere Ventilschließkörper 5, 6, 7, 8 auf. Die Ventilschließkörper 5 bis 8 sind zusammen in der Ventilkammer 3 angeordnet. Die Ventilkammer 3 weist mehrere Ausgänge 9, 10, 11, 12, 13 auf, wobei im Bereich der Ventilkammer 3 Dichtsitze 9', 10', 11', 12', 13' vorgesehen sind. Durch die Dichtsitze 9' bis 13' sind Plätze beziehungsweise Positionen 9' bis 13' für die Ventilschließkörper 5 bis 8 vorgegeben. In diesem Ausführungsbeispiel sind die Plätze 9', 11', 12', 13' durch die Ventilschließkörper 5 bis 8 besetzt, während die Position 10' frei bleibt.

Die Anzahl n der Ausgänge 9 bis 13 ist größer als die Anzahl der Ventilschließkörper 5 bis 8. Vorzugsweise ist die Anzahl der Ventilschließkörper 5 bis 8 um 1 kleiner als die Anzahl der Ausgänge 9 bis 13, also gleich n - 1. In diesem Ausführungsbeispiel ist die Anzahl der Ausgänge 9 bis 13 gleich 5. Die Anzahl der Ventilschließkörper 5 bis 8 ist gleich 4. Die Ventilschließkörper 5 bis 8 sind an vier der fünf Ausgänge 9 bis 13 angeordnet.

Die Ausgestaltung des Ventils 1 ist im Folgenden auch unter Bezugnahme auf die Fig. 2 weiter beschrieben.

Fig. 2 zeigt das in Fig. 1 dargestellte Ventil 1 in einer auszugsweisen, schematischen Schnittdarstellung entlang der mit II bezeichneten Schnittlinie. Die Fig. 1 zeigt andererseits einen Schnitt durch das in Fig. 2 dargestellte Ventil 1 entlang der mit I bezeichneten Schnittlinie.

Das Gehäuse 2 weist einen Boden 15 und eine Decke 16 auf. Zwischen dem Boden 15 und der Decke 16 ist die zylindrische bzw. zylinderförmige Ventilkammer 3 ausgestaltet. An dem Gehäuse 2 ist außerdem ein Eingang 17 vorgesehen, der in die Ventilkammer 3 führt. Beispielsweise kann über eine Leitung 18, die mit dem Eingang 17 des Ventils 1 verbunden ist, Frischwasser in die Ventilkammer 3 geführt werden. Hierbei ist in der Leitung 18 ein Sperrventil 19 angeordnet, das von einer Steuerung 20 des wasserführenden Haushaltsgeräts ansteuerbar ist.

Das Ventil 1 weist außerdem eine als Schrittschaltwerk 25 ausgestaltete Betätigungseinrichtung 25 auf, die beispielsweise über einen Motor oder über einen anderen Aktor betätigbar ist. Das Schrittschaltwerk 25 weist in diesem Ausführungsbeispiel eine Scheibe 26 mit einem Magnetelement 27 auf, die mittels einer Buchse 28 an dem Eingang 17 gelagert ist. Die Scheibe 26 kann hierbei um eine Achse 29 gedreht werden.

Durch Drehen der Scheibe 26 kann mittels des Magnetelements 27 eine Betätigung der Ventilschließkörper 5 bis 8 erfolgen. Hierbei ist die Magnetkraft des Magnetelements 27 so vorgegeben, dass nur ein einzelner Ventilschließkörper 5 bis 8 gleichzeitig bewegt werden kann. Ausgehend von der in der Fig. 1 dargestellten Anordnung der Ventilschließkörper 5 bis 8 an den Ausgängen 9 bis 13 können somit in Abhängigkeit von der Drehrichtung entweder der Ventilschließkörper 5 oder der Ventilschließkörper 6 auf die Position 10 verstellt werden. Somit kann der Ventilschließkörper 5 von dem besetzten Ausgang 9 auf den freien Ausgang 10 verstellt werden beziehungsweise es kann der Ventilschließkörper 6 von dem besetzten Ausgang 11 an den freien Ausgang 10 verstellt werden. Umgekehrt zu der Betätigungsrichtung des jeweiligen Ventilschließkörpers 5, 6 wandert hierdurch der freie Ausgang.

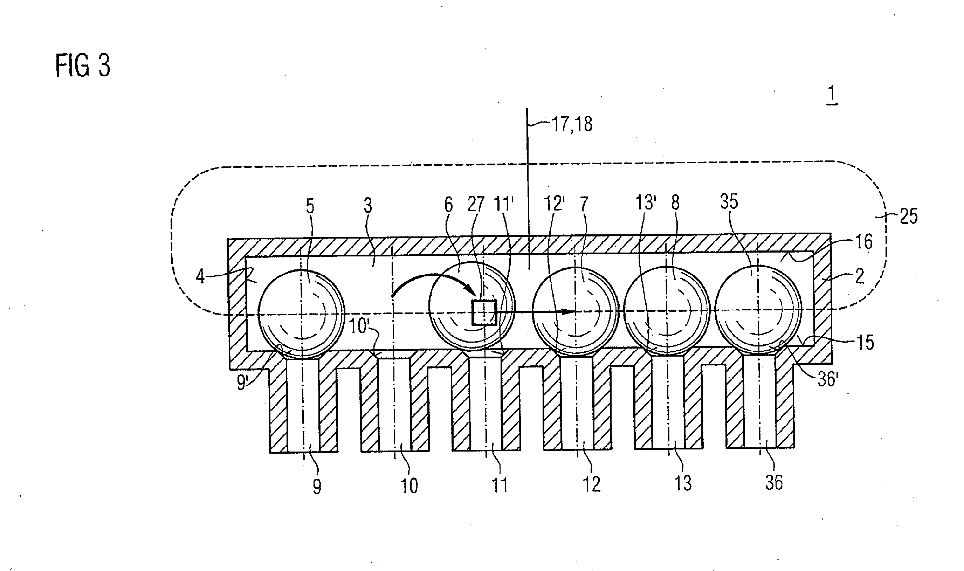

In der in der Fig. 1 dargestellten Anordnung der Ventilschließkörper 5 bis 8 ist der Ausgang 10 frei und somit geöffnet. In diesem Ausführungsbeispiel ist außerdem genau ein Eingang 17 für die Ventilkammer 3 vorgesehen. Beim Öffnen des Sperrventils 19 strömt das Frischwasser somit durch die Ventilkammer 3 zu dem freien Ausgang 10. Hierdurch ist der entsprechende Weg freigegeben. Nach einer Verstellung ist dann entsprechend der Ausgang 9 oder der Ausgang 11 frei. Durch mehrmaliges Verstellen kann jeder der Ausgänge 9 bis 13 angewählt werden, so dass dieser frei ist. Dies ist auch ohne umkehrbare Drehrichtung der Scheibe 26 möglich. Denn die Ausgänge 9 bis 13 sind in diesem Ausführungsbeispiel auf einer ununterbrochenen Kreisbahn angeordnet. Hierbei sind die Ausgänge 9 bis 13 der Ventilkammer 3 hintereinander liegend angeordnet. Allerdings kann durch eine Wand oder eine sonstige Sperre auch eine Unterbrechung gewährleistet werden. Hierdurch ergeben sich endseitige Ausgänge, zwischen denen ein Platztausch nicht möglich ist, wie es auch anhand der Fig. 3 beschrieben ist. Bei solch einer Ausgestaltung ist eine Drehrichtungsumkehrung erforderlich.

Somit weist das Schrittschaltwerk 25 in diesem Ausführungsbeispiel das Magnetelement 27 auf, wobei das Schrittschaltwerk 25 mittels des Magnetelements 27 den jeweiligen Ventilschließkörper 5 bis 8 an den jeweils freien Ausgang verstellt. Die Scheibe 26 kann hierbei insbesondere durch ein Schaltrad (Klinkenrad) 26 gebildet sein. Hierdurch ist eine besonders einfache Ausgestaltung des Verstellmechanismus möglich. Dies eignet sich besonders, falls nur eine Drehrichtung erforderlich ist.

Der Begriff des Schrittschaltwerks 25 ist hierbei allgemein zu verstehen. Wesentlich ist hierbei, dass gezielte, einzelne Verstellungen der Ventilschließkörper 5 bis 8 möglich sind.

Das gezielte Verstellen erfolgt hierbei vorzugsweise durch eine geeignete Aktorik. Beispielsweise setzt sich eine bestimmte Anzahl an Verstellimpulsen der Aktorik in genau einen Platzwechsel eines der Ventilschließkörper 5 bis 8 um. Möglich ist allerdings auch eine Erfassung der Platzwechsel durch geeignete Sensoren.

Auf der Scheibe 26 können noch mehrere Magnetelemente 27 angeordnet sein. Hierdurch kann der Stellweg verringert werden. Beispielsweise kann etwa jede übernächste Position 9' bis 13' mit einem Magnetelement besetzt werden, ohne den grundsätzlichen Bewegungsablauf zu stören. Der damit erreichte Stellweg kann so kurz ausgeführt werden, dass bereits ein kleiner Hubmagnet als Magnetelement 27 mit einem Klinkenrad 26 zum Weiterschalten ausreicht. Die Verteilung solcher Magnetelemente 27 erfolgt vorzugsweise mit Vielfachen des Abstands der kugelförmigen Ventilschließkörper 5 bis 8 in der Ventilkammer 3 mit abweichenden Längen, so dass die zwischen der Ansteuerung und den Ventilschließkörpern 5 bis 8 wirkenden Magnetkräfte über den Stellhub vergleichmäßigt werden und dadurch die Spitzenbelastung und somit der Aufwand des Schrittschaltwerks (Stellantriebs) 25 verringert sind.

Fig. 3 zeigt ein Ventil 1 in einer auszugsweisen, schematischen Schnittdarstellung entsprechend einem zweiten Ausführungsbeispiel. In diesem Ausführungsbeispiel ist die Ventilkammer 3 als längliche Ventilkammer 3 ausgestaltet. Hierbei sind in der Ventilkammer 3 Ventilschließkörper 5, 6, 7, 8, 35 angeordnet. Ferner sind Ausgänge 9, 10, 11, 12, 13, 36 vorgesehen, wobei an dem Ausgang 36 ein Dichtsitz 36' vorgesehen ist, der einen Platz 36' bzw. eine Position 36' für den Ventilschließkörper 35 darstellt. Bei dieser Ausgestaltung kann der Ventilschließkörper 35 allerdings auch an dem Platz 13' angeordnet sein. Außerdem ist der Ventilschließkörper 5 entweder an dem Platz 9' oder an dem Platz 10' angeordnet. Die Ausgänge 9, 36 stellen endseitige Ausgänge 9, 36 dar, zwischen denen ein Platztausch eines Ventilschließkörpers nicht möglich ist. Aufgrund der länglichen Anordnung ist dies bei dem anhand der Fig. 3 beschriebenen Ausführungsbeispiel offensichtlich, die Ventilkammer 3 kann allerdings auch gebogen, insbesondere zu einem ununterbrochenen Kreis gebogen und auch zu einem unterbrochenen Kreis gebogen sein. Eine Unterbrechung kann hierbei auch durch eine Trennwand, eine Strebe oder dergleichen gebildet sein, die einen Platztausch zwischen den Plätzen 9', 36' verhindert.

In der Fig. 3 ist ein Platztausch zwischen den Plätzen 10', 11' veranschaulicht. Hierbei verstellt das Magnetelement 27 den Ventilschließkörper 6 von dem Ausgang 10 zu dem Ausgang 11. Der vormals freie Ausgang 11 wird hierdurch verschlossen, während der vormals besetzte und verschlossene Ausgang 10 freigegeben und somit geöffnet wird. Das Magnetelement 27 kann hierbei in einer oder auch in beiden Richtungen entlang einer Bahn durch das Schrittschaltwerk 25 verstellt werden, wobei die Bahn durch eine unterbrochen dargestellte Linie veranschaulicht ist.

In diesem Ausführungsbeispiel sind die Ausgänge 9, 10, 11, 12, 13, 36 geradlinig hintereinander liegend angeordnet. Die Leitung 18 ist an einer geeigneten Stelle über den Eingang 17 in die Ventilkammer 3 geführt.

Durch die magnetische Einkopplung der mechanischen Bewegung in das hydraulische Schaltelement kann bei den beschriebenen Ausführungsbeispielen ein Problem mit Dichtstellen, wie sie etwa bei Durchführungen für Wellen oder Schieber in rein mechanisch angetriebenen Ventilen auftreten, vermieden werden. Die Dichtkräfte im Ventilsystem werden vom Wasserdruck aufgebracht und brauchen nicht vom Ventilaktor bereitgestellt werden, da nicht gegen den Wasserdruck geschaltet wird. Beispielsweise kann durch ein Sperrventil 19 die Wasserzufuhr beim Schalten unterbrochen werden. Somit sind die Steuerkräfte deutlich geringer als bei herkömmlichen Verteilerventilen. Die Ansteuermechanik und das Schrittschaltwerk 25 können somit sehr viel einfacher und kostengünstiger realisiert werden. Aufgrund der geringen Stellkräfte lassen sich insbesondere in einer Ausgestaltung mit einer Anzahl n - 1 als Kugeln ausgestaltete Ventilschließkörper 5 bis 8, 35 in einer Ventilkammer 3 Anschläge realisieren, die nach spätestens n - 1 Schaltzyklen eine definierte Ausgangsposition liefern, so dass auf einen zusätzlichen Positionssensor verzichtet werden kann. Das Ventil 1 ist prinzipbedingt ein offenes System, so dass sich kein Leitungsdruck im Gehäuse 2 und den mit dem Ventil 1 verbundenen Leitungen außerhalb des Betriebs aufbauen kann. Die Anzahl n an Ausgängen 9 bis 13, 36 kann hierbei vergleichsweise groß gewählt werden. Sowohl der Herstellungsaufwand als auch der Aufwand zur Ansteuerung nimmt hierbei nur unterproportional zu.

### Bezugszeichenliste

- 1: Ventil
- 2: Gehäuse
- 3: Ventilkammer
- 4: Innenwand
- 5 - 8: Ventilschließkörper
- 9 - 13: Ausgang
- 9' - 13': Dichtsitz, Platz, Position
- 15: Boden
- 16: Decke
- 17: Eingang
- 18: Leitung
- 19: Sperrventil
- 20: Steuerung
- 25: Betätigungseinrichtung, vorzugsweise Schrittschaltwerk
- 26: Scheibe
- 27: Magnetelement
- 28: Buchse
- 29: Achse
- 35: Ventilschließkörper
- 36: Ausgang
- 36': Dichtsitz, Platz, Position
- 37: Bahn

## Patentansprüche

1. Ventil (1) mit zumindest einer Ventilkammer (3) und mehreren Ventilschließkörpern (5 bis 8, 35), wobei die Ventilschließkörper (5 bis 8, 35) in der Ventilkammer (3) angeordnet sind, wobei die Ventilkammer (3) mehrere Ausgänge (9 bis 13, 36) aufweist, wobei die Anzahl der Ausgänge (9 bis 13, 36) größer ist als die Anzahl der Ventilschließkörper (5 bis 8, 35) und wobei die Ventilschließkörper (5 bis 8, 35) zum Besetzen der Ausgänge (9 bis 13, 36) an den Ausgängen (9 bis 13, 36) der Ventilkammer (3) angeordnet sind,
**dadurch gekennzeichnet,**
**dass** eine Betätigungseinrichtung (25) vorgesehen ist, die zum Verstellen eines Ventilschließkörpers (5 bis 8, 35), der an einem besetzten Ausgang (9 bis 13, 36) angeordnet ist, an einen freien Ausgang (9 bis 13, 36) dient, dass die Betätigungseinrichtung als Schrittschaltwerk (25) ausgestaltet ist, dass das Schrittschaltwerk (25) zumindest ein Magnetelement (27) aufweist und dass das Schrittschaltwerk (25) mittels des Magnetelements (27) den Ventilschließkörper (5 bis 8, 35) an den freien Ausgang verstellt.

2. Ventil nach Anspruch 1, **dadurch gekennzeichnet, dass** die Anzahl der Ausgänge (9 bis 13, 36) um eins größer ist als die Anzahl der Ventilschließkörper (5 bis 8, 35).

3. Ventil nach Anspruch 1 oder 2, **dadurch gekennzeichnet, dass** genau ein Eingang (17) für die Ventilkammer (3) vorgesehen ist.

4. Ventil nach einem der Ansprüche 1 bis 3, **dadurch gekennzeichnet, dass** die Ausgänge (9 bis 13, 36) der Ventilkammer (3) nebeneinander liegend angeordnet sind.

5. Ventil nach Anspruch 4, **dadurch gekennzeichnet, dass** die Ausgänge (9 bis 13, 36) auf einer ununterbrochenen Kreisbahn angeordnet sind.

6. Ventil nach Anspruch 4, **dadurch gekennzeichnet, dass** zwei Ausgänge (9, 36) als endseitige Ausgänge (9, 36) dienen, zwischen denen ein Platztausch eines Ventilschließkörpers nicht möglich ist.

7. Ventil nach Anspruch 6, **dadurch gekennzeichnet, dass** die Ausgänge (9 bis 13, 36) auf einer zwischen den endseitigen Ausgängen (9, 36) unterbrochenen Kreisbahn angeordnet sind.

8. Ventil nach Anspruch 6, **dadurch gekennzeichnet, dass** die Ausgänge (9 bis 13) der Ventilkammer (3) geradlinig hintereinander liegend angeordnet sind.

9. Ventil nach einem der Ansprüche 1 bis 8, **dadurch gekennzeichnet, dass** das Schrittschaltwerk (25) ein Schaltrad (26) aufweist, an dem das Magnetelement (27) angebracht ist.

10. Wasserführendes Haushaltsgerät mit zumindest einem Ventil (1) nach einem der Ansprüche 1 bis 9.

## Claims

1. Valve (1) having at least one valve chamber (3) and a plurality of valve closing bodies (5 to 8, 35), wherein the valve closing bodies (5 to 8, 35) are arranged in the valve chamber (3), wherein the valve chamber (3) has a plurality of outlets (9 to 13, 36), wherein the number of outlets (9 to 13, 36) is greater than the number of valve closing bodies (5 to 8, 35) and wherein the valve closing bodies (5 to 8, 35) are arranged at the outlets (9 to 13, 36) of the valve chamber (3) for the purpose of occupying the outlets (9 to 13, 36),
**characterised in that**
an actuation device (25) is provided for displacing a valve closing body (5 to 8, 35) which is arranged at an occupied outlet (9 to 13, 36), to an unoccupied outlet (9 to 13, 36), that the actuation device (25) is designed as a stepping mechanism (25), that the stepping mechanism (25) has at least one magnetic element (27) and that the stepping mechanism moves the valve closing body (5 to 8, 35) to the unoccupied outlet by means of the magnetic element (27).

2. Valve according to claim 1, **characterised in that** the number of outlets (9 to 13, 36) is greater by one than the number of valve closing bodies (5 to 8, 35)..

3. Valve according to claim 1 or 2, **characterised in that** exactly one inlet (17) is provided for the valve chamber (3).

4. Valve according to one of claims 1 to 3, **characterised in that** the outlets (9 to 13, 36) of the valve chamber (3) are arranged lying next to one another.

5. Valve according to claim 4, **characterised in that** the outlets (9 to 13, 36) are arranged on a continuous circular path.

6. Valve according to claim 4, **characterised in that** two outlets (9, 36) serve as end-side outlets (9, 36), between which it is not possible to exchange the position of a valve closing body.

7. Valve according to claim 6, **characterised in that** the outlets (9 to 13, 36) are arranged on a discontinuous circular path between the end-side outlets (9, 36).

8. Valve according to claim 6, **characterised in that** the outlets (9 to 13) of the valve chamber (3) are arranged in a straight line lying one behind the other.

9. Valve according to one of claims 1 to 8, **characterised in that** the stepping mechanism (25) comprises a ratchet wheel (26) on which the magnetic element (27) is mounted.

10. Water-conducting household appliance having at least one valve (1) according to one of claims 1 to 9.

## Revendications

1. Vanne (1) avec au moins une chambre de vanne (3) et plusieurs obturateurs (5 à 8, 35), dans laquelle les obturateurs (5 à 8, 35) sont disposés dans la chambre de vanne (3), dans laquelle la chambre de vanne (3) présente plusieurs sorties (9 à 13, 36), dans laquelle le nombre des sorties (9 à 13, 36) est plus grand que le nombre des obturateurs (5 à 8, 35) et dans laquelle les obturateurs (5 à 8, 35) sont disposés pour occuper les sorties (9 à 13, 36) aux sorties (9 à 13, 36) de la chambre de vanne (3), **caractérisée en ce qu'**il est prévu un dispositif d'actionnement (25), qui est utilisé pour déplacer à une sortie libre (9 à 13, 36) un obturateur (5 à 8, 35) qui est disposé à une sortie occupée (9 à 13, 36), **en ce que** le dispositif d'actionnement est réalisé sous forme de mécanisme pas à pas (25), **en ce que** le mécanisme pas à pas (25) présente au moins un élément magnétique (27) et **en ce que** le mécanisme pas à pas (25) déplace au moyen de l'élément magnétique (27) l'obturateur (5 à 8, 35) à la sortie libre.

2. Vanne selon la revendication 1, **caractérisée en ce que** le nombre des sorties (9 à 13, 36) est supérieur de un au nombre des obturateurs (5 à 8, 35).

3. Vanne selon la revendication 1 ou 2, **caractérisée en ce qu'**il est prévu exactement une entrée (17) pour la chambre de vanne (3).

4. Vanne selon l'une quelconque des revendications 1 à 3, **caractérisée en ce que** les sorties (9 à 13, 36) de la chambre de vanne (3) sont disposées l'une à côté de l'autre.

5. Vanne selon la revendication 4, **caractérisée en ce que** les sorties (9 à 13, 36) sont disposées sur une trajectoire circulaire ininterrompue.

6. Vanne selon la revendication 4, **caractérisée en ce que** deux sorties (9, 36) servent de sorties d'extrémité (9, 36), entre lesquelles un échange de place d'un obturateur n'est pas possible.

7. Vanne selon la revendication 6, **caractérisée en ce que** les sorties (9 à 13, 36) sont disposées sur une trajectoire circulaire interrompue entre les sorties d'extrémité (9, 36).

8. Vanne selon la revendication 6, **caractérisée en ce que** les sorties (9 à 13) de la chambre de vanne (3) sont disposées en ligne droite l'une derrière l'autre.

9. Vanne selon l'une quelconque des revendications 1 à 8, **caractérisée en ce que** le mécanisme pas à pas (25) présente une roue à cliquet (26), sur laquelle l'élément magnétique (27) est placé.

10. Appareil ménager à circulation d'eau avec au moins une vanne (1) selon l'une quelconque des revendications 1 à 9.
